# EUROPEAN PATENT SPECIFICATION

(11) **EP 2 944 020 B1**
(45) Date of publication and mention of the grant of the patent: **11.03.2020**
(21) Application number: 13700998.1
(22) Date of filing: 11.01.2013
(51) Int. Cl.: H02M 7/217, H02P 9/48, G01P 3/48, H02M 7/06

(54) **VOLTAGE ADJUSTMENT FOR AN ENERGY HARVESTER**
SPANNUNGSREGELUNG FÜR EINE SCHALTUNG ZUR ENERGIEGEWINNUNG
RÉGLAGE DE TENSION POUR UN DISPOSITIF DE COLLECTE D'ÉNERGIE

(43) Date of publication of application: 18.11.2015
(73) Proprietor: Aktiebolaget SKF, 415 50 Göteborg (SE)
(72) Inventor: BARTL, Frank, 79639 Grenzach-Wyhlen (DE); VAN DER HAM, Andreas Clemens, 3521 BE Utrecht (NL)
(74) Representative: Kuhstrebe, Jochen
(86) International application number: PCT/EP2013/050507
(87) International publication number: WO 2014/108205

(56) References cited:
- DE-A1- 3 722 451
- KR-A- 20090 062 090
- DWARI S ET AL: "Low Voltage Energy Harvesting Systems Using Coil Inductance of Electromagnetic Microgenerators", APPLIED POWER ELECTRONICS CONFERENCE AND EXPOSITION, 2009. APEC 2009. TWENTY-FOURTH ANNUAL IEEE, IEEE, PISCATAWAY, NJ, USA, 15 February 2009 (2009-02-15), pages 1145-1150, XP031442828, ISBN: 978-1-4244-2811-3

## Description

The present invention relates to an arrangement for voltage adjustment for an energy harvesting device, to an energy harvesting device and to a method of voltage adjustment for an energy harvesting device.

### Background

Self-powered sensors (which are in particular not connected to a utility grid) may normally harvest energy from a small electromagnetic source which may generate a low AC voltage. Since the sensor may require DC voltage, the AC voltage provided by the small electromagnetic source may be required to be rectified to generate a DC voltage. Thereby, in particular, the rectification process may reduce the efficiency of the energy harvester due to voltage drop at the used diodes. In order to compensate for the voltage drop due to the diodes, it has been proposed to use a step-up converter and also to use no additional inductance.

An energy harvesting device (also referred to as energy harvester or in particular electromagnetic energy harvester) may relate to an apparatus for harvesting or acquiring (in particular receiving and subsequently storing) electromagnetic energy, such as energy comprised in a (changing) electromagnetic field, energy comprised in an electric current flowing in a conductor, wherein a voltage is produced at ends of the conductor. An energy harvesting device may for example be used to power an autonomous device which is itself not connected to a utility grid providing electric energy to plural consumers. The autonomous device may also be operated in an autarkic manner without requiring supply of energy via a cable which is connected to a utility grid. The autonomous device may for example comprise a wireless sensor or a wearable electronics. The autonomous device may for example comprise low energy electronics which may require in particular DC voltage.

DE 37 22 541 A1 describes a circuitry to adjust a voltage. The circuitry comprises a switch configured to operate depending on whether a half-wave of the input voltage is positive or negative. KR 2009 0062090 A relates to a generator which is coupled to a conventional ac-to-dc converter.

From the publication "Experimental Investigation of Inductorless, Single-Stage Boost Rectification for sub-mW Electromagnetic Energy Harvesters" by G.D. Szarka et al., International Symposium on Low Power Electronics and Design (ISLPED) 2011, 1-3 Aug. 2011, Pages 361 - 366, an electromagnetic vibration energy harvesting system is known, wherein a magnet attached to a cantilever beam oscillates relative to a coil, thereby causing a voltage induced at electric ends of the coil, wherein the energy harvesting device comprises a boost rectifier for boosting the output voltage. Thereby, rectification of the output current and boosting of the output voltage level is carried out in two separable stages. Further, a parasitic stray inductance of the energy harvester is used. A further example for a low voltage energy harvesting system comprising a inductorless ac-to-dc power converter to boost the input voltage is described by Dwari S. et al. in " Low voltage energy harvesting systems using coil inductance of electromagnetic microgenerators" (APPLIED POWER ELECTRONICS CONFERENCE AND EXPOSITION, 15 February 2009, pages 1145-1150, ISBN: 978-1-4244-2811-3).

The load connected to the output terminal of the energy harvester may in particular require a voltage which may be in a predetermined range. However, it has been observed that output voltages provided by conventional energy harvesting devices may not in all situations or circumstances lie in a predetermined range which may prohibit operating the load in these circumstances. Thereby, the load may in particular comprise a sensor which may require the voltage power in a particular voltage range.

There may be a need for an arrangement and a method for voltage adjustment of an energy harvester where the above-mentioned problems are mitigated or at least reduced.

### Summary

The need is solved by the present invention which provides an arrangement for voltage adjustment for an energy harvester according to claim 1 and a method of voltage adjustment for an energy harvester according to claim 15. The dependent claims specify particular embodiments of the present invention.

According to an embodiment of the present invention, an arrangement for voltage adjustment of an energy harvester or energy harvesting device is provided, which may in particular be comprised within the energy harvester. Thereby, the arrangement comprises a first (electric) input terminal and a second (electric) input terminal which input terminals are adapted to receive an AC voltage there between (a frequency of the AC voltage being in particular between 5 Hz and 100 Hz), wherein the AC voltage has an input magnitude (i.e. the magnitude of the input AC voltage). Thereby, the AC voltage is supplied at or by an inductance, in particular between two terminals between which the inductance is acting or present (the inductance being the property of a conducting system or a conductor by which a change in current in the conductor induces a voltage in particular in the conductor itself, wherein in particular, a time varying current flowing through the conductor generates a magnetic field and thereby induces a voltage). The arrangement further comprises a switch module (in particular comprising one or more controllable switches, such as transistors, for example), connected between the first input terminal and the second input terminal for controllably connecting the first input terminal with the second input terminal (wherein both the first input terminal and the second input terminal may not be connected to a ground or earth potential, or wherein one of the first input terminal or the second input terminal may be connected to an earth potential). Further, the arrangement comprises a controller (in particular comprising a circuitry, in particular a semiconductor circuitry which may be programmable) which is adapted to receive an input signal (such as an electrical/optical or wireless input signal) indicative of the input magnitude of the voltage (such that the input signal itself may not correspond or be equal to the input magnitude of the voltage, but from the input signal the input magnitude of the voltage may be derivable, in particular comprising computation, transformation and/or derivation), and to control the switch module (in particular by supplying a (discrete or continuous) control signal to the switch module) to operate selectively (such that a selection is being performed whether to operate the switch module in the first mode or the second mode) in a first mode (in particular first operation mode) or a second mode (in particular second operation mode) depending on the input magnitude (or/and the input signal) (such as for example operating the switch module in the first mode when the input magnitude is in a first voltage range and operating the switch module in the second mode, when the input magnitude is in a second voltage range), in order to adjust (in particular either to maintain or to change or alter) the voltage to have an output magnitude (i.e. the magnitude of the output voltage) in a predetermined range (in particular in a range appropriate for a load connected to output terminals of the energy harvester, in particular an autonomous device, such as a wireless sensor).

The predetermined voltage range may be in particular between 2 V and 10 V, further in particular between 3.4 V and 6.4 V. Thereby, conventional sensor equipment or sensor devices may be powered by the output voltage of the harvester when the output voltage is adjusted using the arrangement of voltage adjustment.

The device connected to output terminals of the energy harvester may for example comprise condition monitoring equipment for condition monitoring of a roller bearing, in particular a roller bearing used in wind energy converters or a roller bearing of a wheel of a coach comprised in a train. In particular, the energy harvester may provide power for a wireless monitoring system for monitoring a condition of a bearing of a wheel. In particular, a rotational speed of the wheel may change in a wide range, such as between 300 rpm and 3000 rpm. In particular, rotation of the wheel may drive a generator comprising a stator winding (providing the inductance) and a magnetic region, in particular connected to a rotation shaft of the wheel.

The inductance may in particular be associated with or formed by a coil, in particular a stator winding of a generator. In particular, the inductance provided by the stator winding of the generator may be utilized by the arrangement for voltage adjustment for adjusting the voltage without requiring an additional inductance besides the inductance of the stator winding of the generator. Thereby, this additional inductance may be avoided, thus simplifying the arrangement.

The switch module may be adapted (in particular when controlled by the controller) to establish a connection between the first input terminal and the second input terminal during particular time intervals which may be set by the controller, in particular via particular control signals supplied to one or more controllable switches comprised in the switch module. In particular, when the inductance is provided by a stator winding of the generator, the input voltage may be relatively high, when the shaft of the generator speeds up and the input voltage may be relatively low (in particular, too low for the load circuit), if the shaft rotates at a low rotational speed. By controlling the switch module to be in a first mode and a second mode, depending on the input signal (in particular, being indicative of a rotational speed of the generator), the output magnitude may be adjusted to lie in the predetermined range. Further, the switch module may be switched off and may not influence the normal behavior of the harvesting device in some circumstances. In particular, if the input voltage is out of the predetermined range (of the circuit to be powered) the switch module may be used (in particular, as controlled by the controller) as a shunt to limit the input voltage, in particular to lie within the predetermined range at output terminals of the energy harvester.

In conventional systems the number of electronic components may be increased, thereby increasing complexity and costs of the conventional solutions. According to embodiments of the present invention, the number of electronic components is reduced compared to conventional systems and costs are reduced. Further, most conventional solutions are not transparent and a failure may disable the whole system. According to an embodiment of the present invention an arrangement for voltage adjustment is provided which is transparent and wherein a failure may not disable the whole energy harvesting system. Further, conventional systems may provide an overall low efficiency. According to embodiments of the present invention, the efficiency of the energy harvesting is increased.

According to an embodiment of the present invention, the arrangement for voltage adjustment may exploit an inductance provided by a stator winding of the generator. In other embodiments, the inductance may be provided by another electronic element. In particular, according to an embodiment of the present invention, no discrete additional inductor may be required for the arrangement for voltage adjustment, since a stray inductance of an energy source may be utilized for boosting the magnitude of the voltage (in particular in the second mode). In particular, the properties of the inductance may only be used in the second mode of operation of the switch module but may not be used in the first mode (and the third mode) of the operation of the switch mode per switch module.

According to an embodiment of the present invention, the inductance is provided between two ends of a stator winding (or a coil, in particular a conductor wound in several revolutions) of a generator (an electro/mechanical device for generating electric energy from rotational mechanical energy), wherein the input signal is indicative of a rotational speed (or an angular velocity) of a shaft of the generator rotating relative to the stator winding. The input signal may in particular be indicative of the frequency of the rotation of the shaft. The rotational speed may in particular be between 300 rpm and 3000 rpm, further in particular between 450 rpm and 2000 rpm, which may correspond to typical rotational speed of a wheel of a coach of a train. Thereby, this embodiment may in particular be applied if the AC voltage is supplied to the first input terminal and the second input terminal from two ends of the stator winding in which the voltage is induced by rotation of the shaft of the generator (wherein at the shaft of the generator a magnetic region is attached or fixed).

Since a magnitude of an induced voltage may depend on a rotational speed of the shaft of the generator, the rotational speed may provide information regarding the input magnitude of the AC voltage such that the input magnitude may be derived from the rotational speed. In particular, directly measuring the AC voltage may not be required, thereby simplifying the arrangement.

According to an embodiment of the present invention in the first mode the switch module is controlled such that the output magnitude is smaller than the input magnitude. In particular, if the input magnitude lies in a region above the predetermined range, the input magnitude may be too high for a load connected to output terminals of the energy harvester. Thus, it may be required to reduce the input magnitude, in order to avoid or reduce damage of the load, in particular a sensor. Thus, reducing, in the first mode of the switch module, the input magnitude to the output magnitude which is smaller than the input magnitude, may avoid or at least reduce damage of the load and may in particular enable operation of the load connected to output terminals of the energy harvester.

According to an embodiment of the present invention, in the first mode the switch module is controlled to permanently connect the first input terminal and the second input terminal. The connection may be a direct connection or a connection via one or more further electronic elements, such as an electric resistor. The connection may in particular be via one or more transistors which inherently may provide a particular resistance, which in particular may be controllable. By the connection of the first input terminal the input voltage may effectively be reduced to lie within the predetermined range.

According to an embodiment of the present invention, in the first mode the switch module is controlled such as to regulate dissipation of (electric) energy, thereby adjusting the output magnitude, in particular by short circuiting the first input terminal with the second input terminal via a regulable or adjustable resistance. Thereby, a voltage drop may be achieved which may result in the output magnitude lying within the predetermined range. Thereby, even if the input magnitude is in a range above the predetermined range, an AC voltage source may still be utilized for powering a load which is connected to output terminals of the energy harvesting device. Thereby, a range of operability of the energy harvesting device may be enhanced and broadened, in particular when connected to an AC source having a variable magnitude of the AC voltage.

According to an embodiment of the present invention, in the second mode the switch module is controlled such that the output magnitude is greater than the input magnitude. Thus, in particular, the arrangement supports cases where the input magnitude is in a range above or below the predetermined range. In particular, if a rotational speed of a generator supplying the AC voltage to the first input terminal and the second input terminal is relatively low, in particular below a threshold, the magnitude or the input magnitude of the AC voltage may be too low (in particular also when taking into account a voltage drop due to rectifying) to drive or to power a load, in particular a sensor system, connected at output terminals of the energy harvester. In this situation, the arrangement may boost the input magnitude to the output magnitude utilizing the properties of the inductance, in particular by inducing a voltage when switching off a connection between the first input terminal and the second input terminal.

According to an embodiment of the present invention, in the second mode the switch module is controlled to alternatingly and periodically (in particular in an oscillating manner having an oscillation frequency associated with an oscillation period or oscillation time interval) establish a connection between the first input terminal and the second input terminal for a closing time interval (i.e. the time interval during which the first input terminal and the second input terminal are connected with each other) and interrupt a connection between the first input terminal and the second input terminal for an opening time interval (i.e. the time interval during which the first input terminal and the second input terminal are disconnected from each other), wherein the alternating frequency (the oscillation frequency of alternatingly controlling the switch module) is between 100 times and 2000 times greater than a frequency of the AC voltage. Thereby, a very fast switching of the switch module (compared to a frequency of the AC voltage) is performed according to a particular embodiment. During the closing time interval a relatively large current may flow via the inductance from the first input terminal to the second input terminal, thereby storing energy in the inductance. In particular, the interruption of the connection may be immediately performed after having established the connection between the first input terminal and the second input terminal and after the closing time interval has been exceeded. Thus, there may be in particular a sudden or abrupt change between a connection and a disconnection of the first input terminal and the second input terminal. By this sudden change of the connectivity, the electric current flowing through the inductance may change in a fast manner, thereby inducing a voltage which may be directed due to Lenz's Law to counteract the change of the current, thus inducing a voltage which may cause increase of the AC voltage magnitude, thus boosting the input magnitude to the output magnitude to lie in the predetermined range.

In particular, the closing time interval and/or the opening time interval and/or the alternating frequency may be selected depending on the input magnitude and/or the predetermined range, in order to adjust the output magnitude to lie within the predetermined range.

According to an embodiment of the present invention, the closing time interval amounts to between 50 % to 80 % of a time period of the alternatingly controlling the switch module (in particular an oscillation time period), wherein during the closing time interval a large current is established in the inductance (in particular in the stator winding of the stator of the generator), thereby storing electric energy (in particular within the inductance), wherein during the subsequent opening time interval (i.e. the opening time interval immediately following the closing time interval), the voltage increases in magnitude relative to the input magnitude (in particular due to induction caused by switching the current flowing in the inductance off). In other embodiments, the closing time interval may amount to other values, such as to a value between 0 % and 50 % of a time period of the alternatingly controlling the switch module. The size of the closing time interval may be derived or selected based on or depending on the input magnitude, the predetermined range and/or other parameters of the energy harvester and/or the generator.

According to an embodiment of the present invention the controller is further adapted to control the switch module to operate in a third mode (or even in one or more third modes), wherein in the third mode the switch system is controlled such that the input magnitude equals the output magnitude. In particular, the input magnitude may at least essentially be equal to the output magnitude in the third mode. In particular, in the third mode the switch module may be controlled to permanently interrupt (i.e. disconnect) a connection between the first input terminal and the second input terminal. In particular, when the input magnitude equals or at least essentially equals the output magnitude (i.e. if the input magnitude in particular lies within the predetermined range), the load connected to output terminals of the energy harvester may be appropriately powered with electric energy without requiring to change the input magnitude. Thus, adjusting the voltage may in this case comprise maintaining the input magnitude of the AC voltage supply to the first input terminal and the second input terminal, without changing the magnitude of the input AC voltage. Thereby, in the third mode, the behavior of the energy harvester may not be affected at all. In particular, the third mode may be a default mode of the switch module and the controller such that the controller may supply a default control signal to one or more controllable switches comprised in the switch module in the third mode, wherein the default control signal may cause the controllable switches comprised in the switch module to adopt an open conduction state, which disconnects the first input terminal from the second input terminal.

According to an embodiment of the present invention in the third mode the switch module is controlled to permanently interrupt a connection between the first input terminal and the second input terminal. Thereby, operation of the energy harvester may not be affected at all in the third mode. In particular, when the arrangement of adjusting the AC voltage fails due to any reason, the arrangement or the controller may at least adopt the default mode (in particular the third mode), thereby allowing to continue operation of the energy harvester.

According to an embodiment of the present invention, the switch module comprises at least one transistor, in particular two transistors in series, in particular field-effect transistors (FETs) having their source connected to a ground potential, wherein the controller is adapted to provide gate drive signals, in particular pulse width modulation signals, to the at least one transistor. Thereby, constructing the switch module may be performed using conventional electronic elements.

According to an embodiment of the present invention there is provided an energy harvesting device (or energy harvester or electromagnetic energy harvester), comprising an arrangement for voltage adjustment according to one of the embodiments as described above, a rectifier, in particular a bridge rectifier, coupled to the first input terminal and the second input terminal, for rectifying the voltage, and a capacitor for storing energy coupled to the output terminals of the rectifier. Thereby, an electromagnetic energy harvesting device may be provided which may output a DC voltage in a predetermined DC range, since the output magnitude of the AC voltage is adjusted to lie within the predetermined AC range. Operation of the rectifier may reduce the voltage by a constant amount, such as between 1 V and 2 V, in particular by about 1.4 V. Thereby, the predetermined AC range may be selected such that the DC range output by the rectifier may correspond to a range of DC voltage which is appropriate for the load to be powered by the energy harvester. In particular, the DC range output by the rectifier may be demanded or required to lie between 2 and 5 V.

According to an embodiment of the present invention, the energy harvesting device may further comprise a generator with a rotatable, during operation, magnetic region coupled to the inductance (in particular coupled by induction or inductively coupled, in particular coupled to the stator winding providing the inductance), the inductance being performed by a stator winding, in particular being formed by a series arrangement of three coils of a stator, wherein in particular adopting the first mode or the second mode or the third mode also depends or is based on an air gap size between the stator winding and the magnetic region, the air gap being in particular in a range of 12% to 50% of the pole pitch of the magnetic region on the rotor, in particular e.g. 0.4 mm to 1.5 mm.

According to an embodiment of the present invention, the energy harvesting device is further adapted to measure the rotational speed of the generator shaft using an electromagnetic effect (in particular induction effect) of the magnetic region, a measurement signal of the rotational speed being supplied to the controller. Thereby, no additional measurement equipment may be required to acquire an input signal for the controller, in order to selectively operate the switch module in the first mode or the second mode or the third mode. Thereby, the energy harvesting device may be simplified. In particular, the magnetic region and/or the entire generator may be used in a synergetic manner in order to on the one hand provide the AC voltage and on the other hand also to provide an input signal which is indicative for the magnitude of the AC voltage. Thereby, the system may considerably be simplified and/or reduced in costs.

It should be understood that features individually or in any combination disclosed, described, mentioned or applied to an arrangement for voltage adjustment for an energy harvester or to an energy harvesting device may also be applied individually or in any combination to a method of voltage adjustment for an energy harvester according to an embodiment of the present invention and vice-versa.

According to an embodiment of the present invention, a method of voltage adjustment (in particular voltage change and/or voltage maintaining) for an energy harvester is provided, wherein the method comprises producing an AC voltage at an inductance (in particular provided by a stator winding of a generator). The method further comprises receiving the AC voltage between a first input terminal and a second input terminal, the AC voltage having an input magnitude. Further, the method comprises receiving, by a controller, an input signal indicative of the input magnitude of the voltage and controlling, by the converter, a switch module to operate selectively in a first mode or a second mode depending on the input magnitude, in order to adjust the voltage to have an output magnitude in a predetermined range (in particular AC range). Thereby, the switch module is connected between the first input terminal and the second input terminal for controllably connecting and disconnecting the first input terminal and the second input terminal.

### Brief description of the Figures

Embodiments of the present invention are now described with reference to the accompanying drawings.
- Fig. 1: schematically illustrates a functional diagram of an electromagnetic harvesting device according to an embodiment of the present invention coupled to a generator;
- Fig. 2: schematically illustrates an electromagnetic harvesting device according to an embodiment of the present invention comprising an arrangement for voltage adjustment according to an embodiment of the present invention;
- Fig. 3: illustrates a graph depicting experimental results of measuring electrical properties of an electromagnetic harvesting device according to an embodiment of the present invention; and
- Fig. 4: illustrates a flow diagram of a method for voltage adjustment according to an embodiment of the present invention.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention as defined by the appended claims. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.,* "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

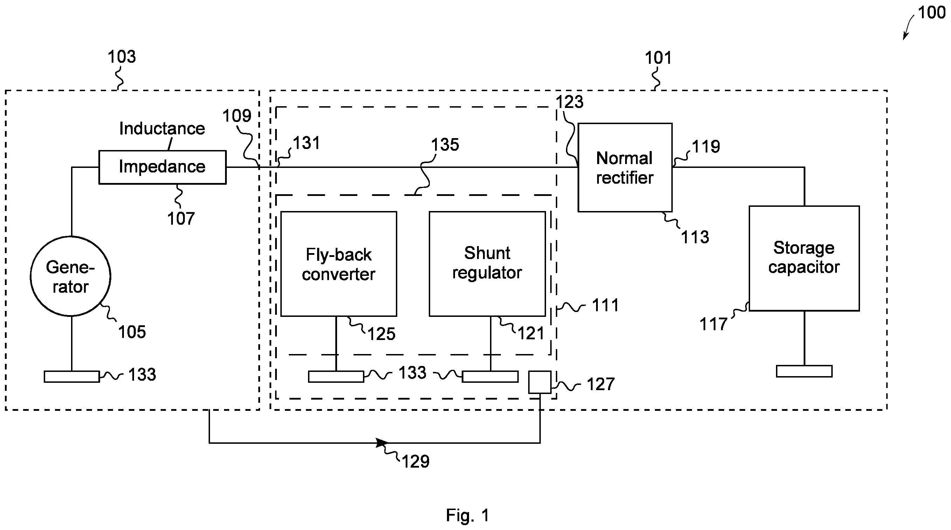

Fig. 1 illustrates an energy supply arrangement 100 comprising an electromagnetic energy harvesting device 101 according to an embodiment of the present invention which is coupled to a generator 103. The generator comprises a schematically illustrated stator winding 105 which provides an inductance 107. The generator generates, upon rotation of a not illustrated rotation shaft comprising a magnetic region, an AC voltage at an output terminal 109, wherein in particular, the AC voltage is generated between the output terminal 109 and the ground potential or another output terminal 133 not connected to the ground potential.

The energy harvesting device 101 comprises an arrangement 111 for adjusting a voltage according to an embodiment of the present invention, a rectifier stage 113 connected as the arrangement 111 to an input terminal 131 and a storage capacitor 117 which is connected to an output terminal 119 of the rectifier stage 113.

The illustration of Fig. 1 of the arrangement 111 for voltage adjustment is a functional diagram, wherein two different modes 121, 125 of the arrangement 111 for voltage adjustment are illustrated side-by-side. In particular, during a first mode 121 of the arrangement 101 in which an input magnitude of the AC voltage output at terminal 109 of the generator is above a predetermined AC range, the arrangement 101 is controlled such that the input magnitude of the AC voltage is reduced by operating the arrangement 111 to act as a shunt regulator 121 which dissipates energy to reduce the input magnitude to an output magnitude at an input terminal 123 of the rectifier stage. In particular, field effect transistors comprised in the arrangement 111 will be switched on and will limit the input voltage by shortening the speed sensor pick-up coil which is embodied by the inductance 107.

During a second mode 125 of operation of the arrangement 111, during which the input magnitude supplied to the input terminal 115 is below a predetermined range, the arrangement 111 is controlled to act as a fly-back converter 125 which effectively boosts the input magnitude of the AC voltage to the output voltage or output magnitude such as to lie within the predetermined range at the input terminal 123 of the rectifier stage 113. For operating the arrangement 111 in the first mode and the second mode, respectively, the arrangement 111 comprises a controller 127 which is adapted to control controllable switches within the arrangement 111, such as to selectively provide the shunt regulator function 121 or the fly-back converter function 125.

The generator 103 may in particular comprise a magnet ring which may be used as a speed sensor which may provide an input signal 129 to the controller 127. Further, the magnet ring may be used as the magnetic field source and may in particular together with the inductance provided by the pick-up coil harvest energy when the rotation shaft of the generator 103 rotates relative to the stator winding 105. Further, the controller 127 may comprise a FET driver logic having the following functions:
1) A shunt function, wherein the FETs may be switched on and may limit the input voltage by shortening the speed sensor pick-up coil. This may be performed during an overvoltage at the input terminals 131,133. Further, the FETs may be always on to shorten the pick-up coil. The energy must then be provided by another source (storage). In particular, the electronics comprised in the arrangement 111 may behave like a step-up converter, at least in a particular mode, such as the second mode 125. Thereby, the input voltage may be an AC voltage and no inductance beside the inductance provided by the generator, is added to the design of the energy harvester 101. Instead, the available inductance (provided by the pick-up coil) is used or re-used for this purpose. By switching the FETs on and off, the rectifier input voltage will boost and the ratio of a voltage drop over diodes when compared to input voltage may be smaller. In addition, the FETs can be switched such as to short circuit the coil as to switch off the power source and the FETs will be switched as such to limit the output voltage from the EM generator source 103. So, the FETs that are parallel to the rectifier 113 may have three functions that are used at different conditions of the EM generator source 103.

The system may have the following advantages. A higher system efficiency may be achieved. Further, a lower start-up voltage may be provided. Further, an impedance matching by changing duty cycle and switching frequency may be enabled. Further, the system may have fewer components compared to conventional systems. Further, the system may provide an overvoltage protection.

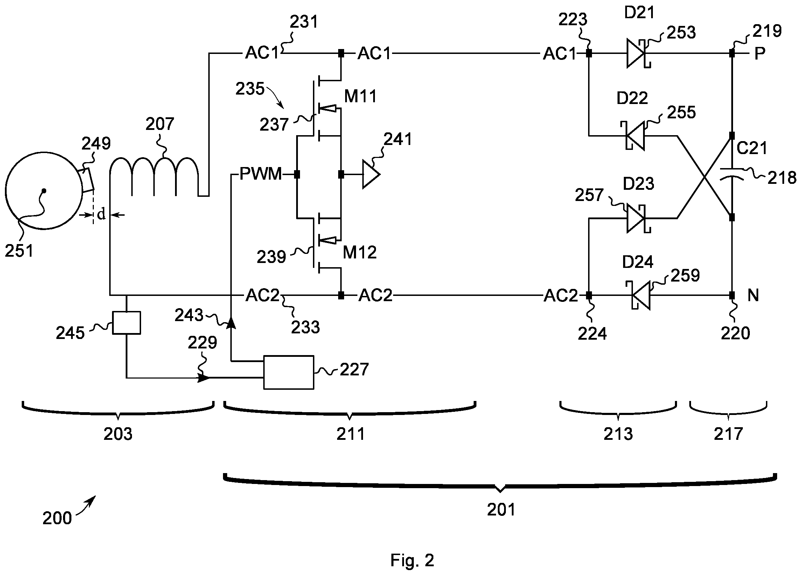

Fig. 2 schematically illustrates another energy production system 200 comprising an electromagnetic energy harvester 201 according to an embodiment of the present invention which is coupled to a generator 203. The energy harvesting device 201 comprises an arrangement 211 for voltage adjustment of the energy harvesting device 201 according to any embodiment of the present invention. The arrangement 211 (also referred to as voltage adjustment arrangement) comprises a first input terminal 231 and a second input terminal 233 between which a AC voltage is received from the generator 203. The voltage adjustment arrangement 211 further comprises a switch module 235 in the present embodiment comprising a first field effect transistor (FET) 237 and a second FET transistor 239. Thereby, the FETs 237, 239 are connected in series between the first input terminal 231 and the second input terminal 233, wherein their source inputs are connected to the ground potential 241.

The voltage adjustment arrangement 211 comprises a controller 227 which provides control signals 243 to the gates of the FETs 237 and 239, in order to control their conductance states. In particular, the controller 227 is adapted to receive an input signal, in particular a rotational speed signal 229, which is indicative of an input magnitude of the AC voltage between the input terminals 231 and 233. The rotational speed signal 229 is provided by an element 245 which measures the frequency of the current or voltage flowing in the coil 207, in particular sensing rotation of the magnetic region 249. The coil 207 represents a stator winding of the generator 203. Relative to the stator winding 207 a, in operation, magnetic region 249 rotates around a rotation shaft 251, thereby providing a rotor of the generator 203. The controller 227 receives the input signal 229 and controls the switch module 235 to operate selectively in a first mode or a second mode depending on the input magnitude of the AC voltage between the first input terminal 231 and the second input terminal 233, in order to adjust the voltage to have an output magnitude in a predetermined range.

Due to the AC voltage provided by the generator 203 (exactly) two FETs 237, 239 may be used to realize a boost function of the voltage adjustment arrangement 211. Thereby, the FETs may be N-channel FETs. Further, the source inputs of the FETs may define the ground level 241.

The energy harvesting device 201 further comprises a rectifier stage 213 which receives the adjusted AC voltage at terminals 223, 224 and which comprises Schottky diodes 253, 255, 257, 259 which are connected in a bridge rectifier configuration to output a DC voltage at output terminals 119, 120 which are received by a storage stage 217 comprising a capacitor 218. A load, such as a wireless sensor device may be connected to the DC output terminals 219, 220, wherein the voltage adjustment arrangement 211 may ensure that the magnitude of the DC voltage lies within a predetermined DC voltage range which is suitable to the load connected between the terminals 219, 220.

The rectifier section 213 including the Schottky diodes may result in a low voltage drop of about 1.4 V. The storage capacitor 217 may comprise a power storage capacitor 218 which may effectively represent an energy source for a load connected between the terminals 219, 220. The coil output signal output by the coil 207 may be related to the rotational speed of the rotational shaft 251 (which may be in particular a rotational shaft of a wheel of a coach of a train) and may thereby be linked to a rotational speed of a bearing supporting the rotational shaft or the wheel. Due to switching of the switch module 235 at relatively high frequency, in particular much higher than the frequency of the AC voltage applied between the terminals 231, 233, a low pass filter may be provided downstream of the voltage adjustment arrangement 211, wherein the cutoff frequency may be around 3000 Hz or a range between 2000 Hz and 4000 Hz. Between the stator winding 207 and the magnetic region 249 an air gap of size d is illustrated.

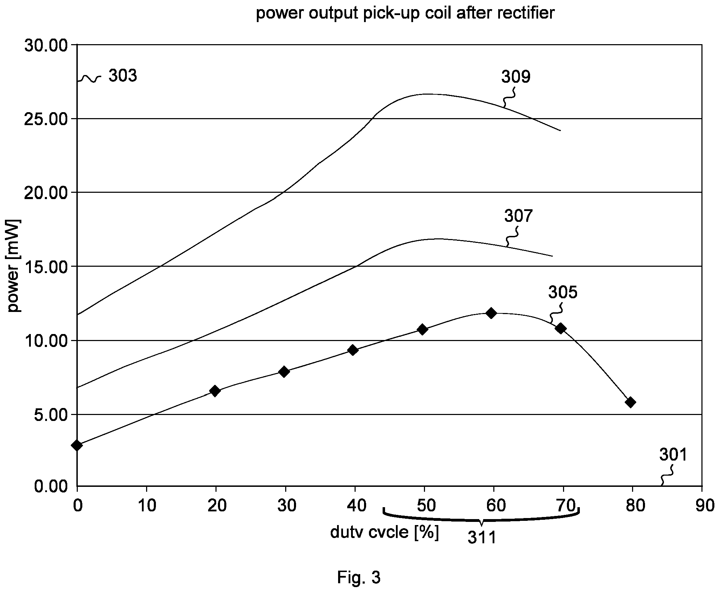

Fig. 3 illustrates graphs of measurements performed on an energy harvester device according to an embodiment of the present invention, such as the energy harvesting device 201 illustrated in Fig. 2. Fig. 3 is described in conjunction with the following table 1 which lists measurement values used to construct the curves in the graph of Fig. 3.

**Table 1:**

| **rpm** | **boost** | **boost** | **AC** | **AC** | **DC** | **load** | **power** |
|---|---|---|---|---|---|---|---|
| | **kHz** | **%** | **Vrms** | **Vpp** | **V** | **Ω** | **mW** |
| **200 rpm** | | | | | | | |
| **200** | 0 | 0 | 2.21 | 2.79 | 1.71 | OC | |
| **200** | 35 | 50 | 3.30 | 4.67 | 7.26 | OC | |
| | | | | | | | |

| **200 rpm** | | | | | | | |
|---|---|---|---|---|---|---|---|
| **200** | 0 | 0 | 2.10 | 2.97 | 1.54 | 820 | 2.89 |
| **200** | 35 | 20 | 2.16 | 3.05 | 2.31 | 820 | 6.51 |
| **200** | 35 | 30 | 2.23 | 3.15 | 2.53 | 820 | 7.81 |
| **200** | 35 | 40 | 2.30 | 3.25 | 2.75 | 820 | 9.22 |
| **200** | 35 | 50 | 2.32 | 3.28 | 2.95 | 820 | 10.61 |
| **200** | 35 | 60 | 2.27 | 3.21 | 3.10 | 820 | 11.72 |
| **200** | 35 | 70 | 2.03 | 2.87 | 2.95 | 820 | 10.61 |
| **200** | 35 | 80 | 1.47 | 2.08 | 2.15 | 820 | 5.64 |
| | | | | | | | |

| **250 rpm** | | | | | | | |
|---|---|---|---|---|---|---|---|
| **250** | 0 | 0 | 2.43 | 3.44 | 2.37 | 820 | 6.85 |
| **250** | 35 | 30 | 2.76 | 3.90 | 3.18 | 820 | 12.33 |
| **250** | 35 | 50 | 2.85 | 4.03 | 3.72 | 820 | 16.88 |
| **250** | 35 | 70 | 2.43 | 3.44 | 3.65 | 820 | 16.25 |
| | | | | | | | |

| **315 rpm** | | | | | | | |
|---|---|---|---|---|---|---|---|
| **315** | 0 | 0 | 3.07 | 4.34 | 3.09 | 820 | 11.64 |
| **315** | 35 | 30 | 3.41 | 4.82 | 4.05 | 820 | 20.00 |
| **315** | 35 | 50 | 3.50 | 4.95 | 4.68 | 820 | 26.71 |
| **315** | 35 | 70 | 2.90 | 4.10 | 4.48 | 820 | 24.48 |

The columns of Table 1 indicate the following:
- rpm:: Rotational speed of the rotation shaft of the generator, such as rotational shaft 251 illustrated in Fig. 2.
- Boost (kHz):: The switching frequency of the pulse width modulation signal 243 generated by the controller 227 illustrated in Fig. 2.
- Boost %: The percentage of the oscillation period, during which the first input terminal 231 is connected to the second input terminal 233 by switching the FETs 237, 239 on, i.e. the duty cycle.
- AC Vrms: The input magnitude of the AC voltage applied between the first input terminal 231 and the second input terminal 233 illustrated in Fig. 2.
- AC Vpp: The output magnitude after boosting the input magnitude by the voltage adjustment arrangement 211.
- DC V: The DC voltage magnitude output at the DC output terminals 219, 220 illustrated in Fig. 2.
- Load (Ω):: The resistance of the load connected to the DC output terminals 219, 220.
- Power (mW): The power supplied to the load.

As can be seen from table 1, depending on the duty cycle, the input magnitude (see column AC Vrms) is increased to the output magnitude (see column AC Vpp), to lie within a predetermined range and also the power varies, as is illustrated in the graphs of Fig. 3. In Fig. 3 an abscissa 301 denotes a duty cycle (i.e. a percentage of switching on the FETs 237, 239 illustrated in Fig. 2), while an ordinate 303 denotes the power consumed by the load connected at the DC output terminals 219, 220 illustrated in Fig. 2. Thereby, the curve 305 illustrates the situation when the rotational shaft 251 rotates with a rotational speed of 315 rpm, the curve 307 illustrates the case where the rotational shaft 251 rotates with a rotational speed of 250 rpm and curve 309 illustrates the case where the rotational shaft 251 rotates with a speed of 200 rpm. As can be seen from the curves 305, 307, 309, illustrated in Fig. 3, in a range 311 ranging from about 45 % to 70 % duty cycle, the maximum power is achieved for the different rotational speeds between 200 rpm and 315 rpm. Further, as can be seen from the Table 1 above also in this duty cycle range the output magnitude of the AC voltage lies within the predetermined range in which the load will be suitably operated, in particular a voltage range between 2 V and 5 V at the DC output terminals 219, 220 which may correspond to a predetermined AC range between 3.4 V and 6.4 V between the terminals 223, 224.

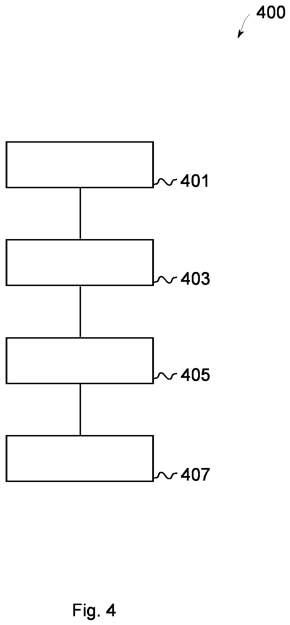

Fig. 4 illustrates a flow diagram of a method 400 for voltage adjustment according to an embodiment of the present invention. In step 401 an AC voltage at an inductance 107,207 is produced. In step 403 the AC voltage is received between a first input terminal 131,231 and a second input terminal 133,233, the AC voltage having an input magnitude. In step 405 an input signal 129,229 indicative of the input magnitude of the voltage is received by a controller. At step 407 a switch module 135,235 is controlled by the controller to operate selectively in a first mode 121 or a second mode 125 depending on the input magnitude, in order to adjust the voltage to have an output magnitude in a predetermined range, wherein the switch module 135,235 is connected between the first input terminal 131,231 and the second input terminal 231,233.

### List of reference numerals

- 100: Energy generating system
- 101: Electromagnetic harvesting device
- 103: Generator
- 105: Stator
- 107: Inductance
- 109: Generator output terminal
- 131,133: Input terminals
- 117: Storage capacitor
- 119: Rectifier output terminal
- 121: Shunt regulator function
- 123: Rectifier input terminal
- 125: Fly-back converter function
- 127: Controller
- 129: Input signal
- 135: switch module
- 200: Energy generating system
- 201: Voltage adjustment arrangement
- 203: Generator
- 213: Rectifier stage
- 217: Storage stage
- 219, 220: DC output terminals
- 223, 224: Rectifier input terminals
- 227: Controller
- 229: Rotational speed signal
- 231, 233: First input terminal, second input terminal
- 235: Switch module
- 237,239: FETs
- 241: Source terminals
- 211: Voltage adjustment arrangement
- 245: Frequency sensing element
- 207: Stator winding
- 249: Magnetic region
- 251: Rotational shaft
- 253, 255, 257, 259: Schottky diodes
- 218: Power capacitor
- 301: Abscissa
- 303: Ordinate
- 305, 307, 309: Curves

## Claims

1. Arrangement (111,211) for voltage adjustment for an energy harvester (101,201), the arrangement comprising:
a first input terminal (131,231) and a second input terminal (133,233) adapted to receive an AC voltage therebetween, the AC voltage having an input magnitude, the AC voltage being supplied at an inductance (107,207);
a switch module (135,235) connected between the first input terminal (131,231) and the second input terminal (133,233) for controllably connecting the first input terminal with the second input terminal,
**characterized in that** the arrangement further comprises a controller (127,227) adapted to receive an input signal (129,229) indicative of the input magnitude of the AC voltage, and to control the switch module (135,235) to operate selectively in a first mode (121) or a second mode (125) depending on the input magnitude, in order to adjust the voltage to have an output magnitude in a predetermined range.

2. Arrangement according to claim 1, wherein the inductance (107,207) is provided between two ends of a stator winding (107,207) of a generator (103,203), wherein the input signal (129,229) is indicative of a rotational speed of a shaft (251) of the generator (203) rotating relative to the stator winding (207).

3. Arrangement according to claim 1 or 2, wherein in the first mode (121) the switch module (135,235) is controlled such that the output magnitude is smaller than the input magnitude.

4. Arrangement according to claim 3, wherein in the first mode (121) the switch module (135,235) is controlled to permanently connect the first input terminal (131,231) and the second input terminal (133,233).

5. Arrangement according to claim 3 or 4, wherein in the first mode (121) the switch module (135,235) is controlled such as to regulate dissipation of energy, thereby adjusting the output magnitude.

6. Arrangement according to one of the preceding claims, wherein in the second mode (125) the switch module (135,235) is controlled such that the output magnitude is greater than the input magnitude.

7. Arrangement according to claim 6, wherein in the second mode (125) the switch module (135,235) is controlled to alternatingly and periodically establish a connection between the first input terminal (131,231) and the second input terminal (133,233) for a closing time interval and interrupt a connection between the first input terminal (131,231) and the second input terminal (133,233) for an opening time interval.

8. Arrangement according to claim 7, wherein the closing time interval amounts to between 50 % to 80% of a time period of the alternatingly controlling the switch module (135,235), wherein during the closing time interval a large current is established in the inductance (107,207) thereby storing energy, wherein during the subsequent opening time interval the voltage increases in magnitude relative to the input magnitude.

9. Arrangement according to one of the preceding claims, wherein the controller (127,227) is further adapted to control the switch module (135,235) to operate in a third mode, wherein in the third mode the switch system is controlled such that input magnitude equals the output magnitude.

10. Arrangement according to claim 9, wherein in the third mode the switch module (135,235) is controlled to permanently interrupt a connection between the first input terminal (131,231) and the second input terminal (133,233).

11. Arrangement according to one of the preceding claims, wherein the switch module (135,235) comprises at least one transistor (237,239), the controller (227) being adapted to provide gate drive signals (243,PWM), to the at least one transistor (237,239).

12. Energy harvesting device (101,201), comprising:
an arrangement (111,211) for voltage adjustment according to one of the preceding claims;
a rectifier (113,213) coupled to the first input terminal (131,231) and the second input terminal (133,233) for rectifying the voltage; and
a capacitor (117,217) for storing energy coupled to output terminals of the rectifier.

13. Energy harvesting device according to claim 12, further comprising:
a generator (103,203) with a rotatable, during operation, magnetic region (249) inductively coupled to the inductance (207), the inductance being formed by a stator winding, in particular being formed by a series arrangement of one or more coils, further in particular three coils,
wherein in particular adopting the first mode or the second mode or the third mode also depends on an air gap size (d) between the stator winding (207) and the magnetic region (249).

14. Energy harvesting device according to claim 12 or 13, further adapted to measure (245) the rotational speed of the generator shaft (251) using an electromagnetic effect of the magnetic region (249), a measurement signal of the rotational speed being supplied to the controller (227).

15. Method of voltage adjustment for an energy harvester, the method comprising:
producing an AC voltage at an inductance (107,207);
receiving the AC voltage between a first input terminal (131,231) and a second input terminal (133,233), the AC voltage having an input magnitude,
**characterized in that** the method further comprises:
receiving, by a controller (127,227), an input signal (129,229) indicative of the input magnitude of the voltage, and
controlling, by the controller (127,227), a switch module (135,235) to operate selectively in a first mode (121) or a second mode (125) depending on the input magnitude, in order to adjust the voltage to have an output magnitude in a predetermined range,
wherein the switch module (135,235) is connected between the first input terminal (131,231) and the second input terminal (231,233).

## Patentansprüche

1. Anordnung (111, 211) für die Spannungseinstellung für einen Energy-Harvester (101, 201), wobei die Anordnung Folgendes umfasst:
einen ersten Eingangsanschluss (131, 231) und einen zweiten Eingangsanschluss (133, 233), die dafür ausgelegt sind, eine Wechselspannung zwischen ihnen zu empfangen, wobei die Wechselspannung eine Eingangsgröße aufweist, wobei die Wechselspannung einer Induktivität (107, 207) zugeführt wird;
ein Schaltmodul (135, 235), das zwischen dem ersten Eingangsanschluss (131, 231) und dem zweiten Eingangsanschluss (133, 233) angeschlossen ist, um den ersten Eingangsanschluss mit dem zweiten Eingangsanschluss steuerbar zu verbinden,
**dadurch gekennzeichnet, dass** die Anordnung ferner eine Steuereinrichtung (127, 227) umfasst, die dafür ausgelegt ist, ein Eingangssignal (129, 229) zu empfangen, das die Eingangsgröße der Wechselspannung anzeigt, und das Schaltmodul (135, 235) zu steuern, in Abhängigkeit von der Eingangsgröße selektiv in einem ersten Modus (121) oder einem zweiten Modus (125) zu arbeiten, um die Spannung einzustellen, so dass sie eine Ausgangsgröße in einem vorbestimmten Bereich aufweist.

2. Anordnung nach Anspruch 1, wobei die Induktivität (107, 207) zwischen zwei Enden einer Stator-Wicklung (107, 207) eines Generators (103, 203) vorgesehen ist, wobei das Eingangssignal (129, 229) eine Drehzahl einer Welle (251) des Generators (203) anzeigt, die sich relativ zu der Stator-Wicklung (207) dreht.

3. Anordnung nach Anspruch 1 oder 2, wobei das Schaltmodul (135, 235) in dem ersten Modus (121) derart gesteuert wird, dass die Ausgangsgröße kleiner als die Eingangsgröße ist.

4. Anordnung nach Anspruch 3, wobei das Schaltmodul (135, 235) in dem ersten Modus (121) gesteuert wird, um den ersten Eingangsanschluss (131, 231) und den zweiten Eingangsanschluss (133, 233) permanent zu verbinden.

5. Anordnung nach Anspruch 3 oder 4, wobei das Schaltmodul (135, 235) in dem ersten Modus (121) gesteuert wird, um den Energieverlust zu regulieren, und dadurch die Ausgangsgröße einzustellen.

6. Anordnung nach einem der vorhergehenden Ansprüche, wobei das Schaltmodul (135, 235) in dem zweiten Modus derart gesteuert wird, dass die Ausgangsgröße größer als die Eingangsgröße ist.

7. Anordnung nach Anspruch 6, wobei das Schaltmodul (135, 235) in dem zweiten Modus gesteuert wird, um für ein Schließzeitintervall zwischen dem ersten Einganganschluss (131, 231) und dem zweiten Eingangsanschluss (133,233) eine Verbindung wechselseitig und periodisch herzustellen und für ein Öffnungszeitintervall zwischen dem ersten Einganganschluss (131, 231) und dem zweiten Eingangsanschluss (133,233) eine Verbindung zu unterbrechen.

8. Anordnung nach Anspruch 7, wobei das Schließzeitintervall zwischen 50 % und 80 % einer Zeitdauer des wechselseitigen Steuerns des Schaltmoduls (135, 235) beträgt, wobei während des Schließzeitintervalls ein hoher Strom in der Induktivität (107, 207) hergestellt wird, wodurch Energie gespeichert wird, wobei während des darauffolgenden Öffnungszeitintervalls die Spannung im Betrag relativ zu der Eingangsgröße zunimmt.

9. Anordnung nach einem der vorhergehenden Ansprüche, wobei die Steuereinrichtung (127, 2275) ferner dafür ausgelegt ist, das Schaltmodul (135, 235) zu steuern, in einem dritten Modus zu arbeiten, wobei das Schaltsystem in dem dritten Modus derart gesteuert wird, dass die Eingangsgröße gleich der Ausgangsgröße ist.

10. Anordnung nach Anspruch 9, wobei das Schaltmodul (135, 235) in dem dritten Modus gesteuert wird, um eine Verbindung zwischen dem ersten Eingangsanschluss (131, 231) und dem zweiten Eingangsanschluss (133, 233) permanent zu unterbrechen.

11. Anordnung nach einem der vorhergehenden Ansprüche, wobei das Schaltmodul (135, 235) mindestens einen Transistor (237, 239) enthält, wobei die Steuereinrichtung (227) dafür ausgelegt ist, für den mindestens einen Transistor (237, 239) Gate-Steuersignale (243, PWM) bereitzustellen.

12. Energy-Harvester-Vorrichtung (101, 201), die Folgendes umfasst:
eine Anordnung (111, 211) für die Spannungseinstellung nach einem der vorhergehenden Ansprüche;
einen Gleichrichter (113,213), der an den ersten Eingangsanschluss (131, 231) und den zweiten Eingangsanschluss (133, 233) gekoppelt ist, um die Spannung gleichzurichten; und
einen Kondensator (117, 217) zum Speichern von Energie, der an die Ausgangsanschlüsse des Gleichrichters gekoppelt ist.

13. Energy-Harvester-Vorrichtung nach Anspruch 12, die ferner Folgendes umfasst:
einen Generator (102, 203) mit einem während des Betriebs drehbaren magnetischen Bereich (249), der an die Induktivität (207) induktiv gekoppelt ist, wobei die Induktivität durch eine Stator-Wicklung gebildet ist, insbesondere durch eine Reihenanordnung einer oder mehrerer Spulen, insbesondere dreier Spulen, gebildet ist,
wobei insbesondere das Annehmen des ersten Modus oder des zweiten Modus oder des dritten Modus auch von einer Luftspaltgröße (d) zwischen der Stator-Wicklung (207) und dem magnetischen Bereich (249) abhängig ist.

14. Energy-Harvester-Vorrichtung nach Anspruch 12 oder 13, die ferner dafür ausgelegt ist, die Drehzahl der Generatorwelle (251) unter Verwendung eines elektromagnetischen Effekts des magnetischen Bereichs (249) zu messen, wobei der Steuereinrichtung (227) ein Messsignal der Drehzahl zugeführt wird.

15. Verfahren zur Spannungseinstellung für einen Energy-Harvester, wobei das Verfahren Folgendes umfasst:
Erzeugen einer Wechselspannung an einer Induktivität (107, 207);
Empfangen der Wechselspannung zwischen einem ersten Eingangsanschluss (131, 231) und einem zweiten Eingangsanschluss (133, 233), wobei die Wechselspannung eine Eingangsgröße aufweist,
**dadurch gekennzeichnet, dass** das Verfahren ferner Folgendes umfasst:
Empfangen eines Eingangssignals (129, 229), das die Eingangsgröße der Spannung anzeigt, durch eine Steuereinrichtung (127, 227), und
Steuern eines Schaltmoduls (135, 235) durch die Steuereinrichtung (127, 227), um in Abhängigkeit von der Eingangsgröße selektiv in einem ersten Modus (121) oder einem zweiten Modus (125) zu arbeiten, um die Spannung einzustellen, so dass sie eine Ausgangsgröße in einem vorbestimmten Bereich aufweist,
wobei das Schaltmodul (135, 235) zwischen dem ersten Eingangsanschluss (131, 231) und dem zweiten Eingangsanschluss (231, 233) angeschlossen ist.

## Revendications

1. Agencement (111, 211) de réglage de tension pour un récupérateur d'énergie (101, 201), l'agencement comprenant :
une première borne d'entrée (131, 231) et une deuxième borne d'entrée (133, 233) adaptées à recevoir une tension alternative entre elles, la tension alternative présentant une amplitude d'entrée, la tension alternative étant délivrée au niveau d'une inductance (107, 207) ;
un module commutateur (135, 235), connecté entre la première borne d'entrée (131, 231) et la deuxième borne d'entrée (133, 233), destiné à connecter de façon commandable la première borne d'entrée à la deuxième borne d'entrée,
l'agencement étant **caractérisé en ce qu'**il comprend en outre une unité de commande (127, 227) adaptée à recevoir un signal d'entrée (129, 229) indiquant l'amplitude d'entrée de la tension alternative et à commander au module commutateur (135, 235) de fonctionner sélectivement dans un premier mode (121) ou un deuxième mode (125) en fonction de l'amplitude d'entrée, dans le but de régler la tension de façon à ce qu'elle présente une amplitude de sortie s'inscrivant dans une plage prédéterminée.

2. Agencement selon la revendication 1, dans lequel l'inductance (107, 207) est placée entre deux extrémités d'un enroulement statorique (107, 207) d'un générateur (103, 203), le signal d'entrée (129, 229) indiquant une vitesse de rotation d'un arbre (251) du générateur (203) en rotation par rapport à l'enroulement statorique (207).

3. Agencement selon la revendication 1 ou 2, dans lequel, dans le premier mode (121), le module commutateur (135, 235) est commandé de telle manière que l'amplitude de sortie soit plus faible que l'amplitude d'entrée.

4. Agencement selon la revendication 3, dans lequel, dans le premier mode (121), le module commutateur (135, 235) est commandé de manière à connecter de façon permanente la première borne d'entrée (131, 231) et la deuxième borne d'entrée (133, 233).

5. Agencement selon la revendication 3 ou 4, dans lequel, dans le premier mode (121), le module commutateur (135, 235) est commandé de manière à réguler la dissipation d'énergie pour régler ainsi l'amplitude de sortie.

6. Agencement selon l'une des revendications précédentes, dans lequel, dans le deuxième mode (125), le module commutateur (135, 235) est commandé de telle manière que l'amplitude de sortie soit plus grande que l'amplitude d'entrée.

7. Agencement selon la revendication 6, dans lequel, dans le deuxième mode (125), le module commutateur (135, 235) est commandé de manière à établir, en alternance et périodiquement, une connexion entre la première borne d'entrée (131, 231) et la deuxième borne d'entrée (133, 233) pendant un intervalle de temps de fermeture et interrompre une connexion entre la première borne d'entrée (131, 231) et la deuxième borne d'entrée (133, 233) pendant un intervalle de temps d'ouverture.

8. Agencement selon la revendication 7, dans lequel l'intervalle de temps de fermeture représente entre 50 % et 80 % d'une période de temps de la commande en alternance du module commutateur (135, 235), un fort courant étant établi dans l'inductance (107, 207) au cours de l'intervalle de temps de fermeture pour emmagasiner ainsi de l'énergie, la tension augmentant en amplitude par rapport à l'amplitude d'entrée au cours de l'intervalle de temps d'ouverture suivant.

9. Agencement selon l'une des revendications précédentes, dans lequel l'unité de commande (127, 227) est adaptée en outre à commander au module commutateur (135, 235) de fonctionner dans un troisième mode, le système commutateur étant, dans le troisième mode, commandé de telle manière que l'amplitude d'entrée soit égale à l'amplitude de sortie.

10. Agencement selon la revendication 9, dans lequel, dans le troisième mode, le module commutateur (135, 235) est commandé de manière à interrompre de façon permanente une connexion entre la première borne d'entrée (131, 231) et la deuxième borne d'entrée (133, 233).

11. Agencement selon l'une des revendications précédentes, dans lequel le module commutateur (135, 235) comprend au moins un transistor (237, 239), l'unité de commande (227) étant adaptée à fournir des signaux d'attaque de grille (243, PWM) à l'au moins un transistor (237, 239).

12. Dispositif récupérateur d'énergie (101, 201), comprenant :
un agencement (111, 211) de réglage de tension selon l'une des revendications précédentes ;
un redresseur (113, 213), couplé à la première borne d'entrée (131, 231) et à la deuxième borne d'entrée (133, 233), destiné à redresser la tension ; et
un condensateur (117, 217) destiné à emmagasiner de l'énergie couplé à des bornes de sortie du redresseur.

13. Dispositif récupérateur d'énergie selon la revendication 12, comprenant en outre :
un générateur (103, 203) doté d'une région magnétique (249) rotative en cours de fonctionnement couplée inductivement à l'inductance (207), l'inductance étant formée d'un enroulement statorique, plus particulièrement formée d'un montage en série d'une ou de plusieurs bobines, plus particulièrement encore de trois bobines,
plus particulièrement, l'adoption du premier mode ou du deuxième mode ou du troisième mode étant également fonction d'une dimension (d) d'entrefer entre l'enroulement statorique (207) et la région magnétique (249) .

14. Dispositif récupérateur d'énergie selon la revendication 12 ou 13, adapté en outre à mesurer (245) la vitesse de rotation de l'arbre (251) du générateur à l'aide d'un effet électromagnétique de la région magnétique (249), un signal de mesure de la vitesse de rotation étant fourni à l'unité de commande (227).

15. Procédé de réglage de tension pour un récupérateur d'énergie, le procédé comprenant :
la production d'une tension alternative au niveau d'une inductance (107, 207) ;
la réception de la tension alternative entre une première borne d'entrée (131, 231) et une deuxième borne d'entrée (133, 233), la tension alternative présentant une amplitude d'entrée,
le procédé étant **caractérisé en ce qu'**il comprend en outre :
la réception, par une unité de commande (127, 227), d'un signal d'entrée (129, 229) indiquant l'amplitude d'entrée de la tension, et
la commande, par l'unité de commande (127, 227), à un module commutateur (135, 235) de fonctionner sélectivement dans un premier mode (121) ou un deuxième mode (125) en fonction de l'amplitude d'entrée, dans le but de régler la tension de façon à ce qu'elle présente une amplitude de sortie s'inscrivant dans une plage prédéterminée,
le module commutateur (135, 235) étant connecté entre la première borne d'entrée (131, 231) et la deuxième borne d'entrée (231, 233).
